# EUROPEAN PATENT APPLICATION

(11) **EP 4 546 845 A1**
(43) Date of publication of application: **30.04.2025**
(21) Application number: 23838916.7
(22) Date of filing: 11.07.2023
(51) Int. Cl.: H04W 16/10

(54) **COMMUNICATION METHOD AND DEVICE, AND STORAGE MEDIUM**

(30) Priority: 15.07.2022 CN 202210836729
(71) Applicant: ZTE Corporation, Shenzhen, Guangdong 518057 (CN)
(72) Inventor: LU, Youxiong, Shenzhen, Guangdong 518057 (CN); XING, Weimin, Shenzhen, Guangdong 518057 (CN); MIAO, Ting, Shenzhen, Guangdong 518057 (CN)
(74) Representative: Aipex B.V.
(86) International application number: PCT/CN2023/106680
(87) International publication number: WO 2024/012424

(57) **Abstract**

Provided are a communication method, a communication device, and a storage medium. The communication method performed by a first communication node includes acquiring (S110) a carrier frequency configuration message, where the carrier frequency configuration message indicates a frequency-domain resource mapping mode; and determining (S120) a frequency-domain resource used by a sidelink signal or channel according to the frequency-domain resource mapping mode.

## Description

### TECHNICAL FIELD

The present application relates to the field of communications, for example, a communication method, a communication device, and a storage medium.

### BACKGROUND

Sidelink (SL) communication, including vehicle-to-everything (V2X) communication and UE-to-UE (device-to-device, (D2D)) direct communication and the like, may operate in a licensed spectrum such as an Intelligent Traffic Systems (ITS) spectrum or operate in an unlicensed spectrum. The SL communication includes a synchronization process, a discovery process, a data transmission and reception process, an acknowledgment (ACK)/non-acknowledgment (NACK) feedback process, and the like. In the SL communication for New Radio (NR), resources used by a sidelink synchronization signal block (S-SSB) consist of 11 contiguous resource blocks (RBs) in the frequency domain and 14 symbols in the time domain, and each RB in the frequency domain includes 12 resource elements (REs). Resources used by a physical sidelink control channel (PSCCH)/physical sidelink shared channel (PSSCH) consist of one or more sub-channels in the frequency domain and multiple symbols in the time domain. Typically, in order to access system, a UE is required to perform blind detection on S-SSB to obtain information such as the frame structure. However, the single frame structure design limits the flexibility of SL operation in unlicensed carriers. It is urgent to design a flexible frequency-domain resource mapping mode suitable for unlicensed sidelink (SL-U) and a corresponding frame structure to facilitate flexible deployment of SL-U in various regions.

### SUMMARY

The present application provides a communication method, a communication device, and a storage medium, enabling a flexible frequency-domain resource mapping mode suitable for SL-U and facilitating flexible deployment of SL-U in various regions.

An embodiment of the present application provides a communication method. The communication method is performed by a first communication node. The communication method includes acquiring a carrier frequency configuration message, where the carrier frequency configuration message indicates a frequency-domain resource mapping mode; and determining a frequency-domain resource used by a sidelink signal or channel according to the frequency-domain resource mapping mode.

An embodiment of the present application provides a communication method. The communication method is performed by a second communication node. The communication method includes sending a dedicated system message or a system broadcast message to a first communication node to enable the first communication node to acquire a carrier frequency configuration message according to the dedicated system message or the system broadcast message. The carrier frequency configuration message includes a frequency-domain resource mapping mode. The frequency-domain resource mapping mode is used to determine a frequency-domain resource used by a sidelink signal or channel.

An embodiment of the present application provides a communication apparatus. The communication apparatus is applied to a first communication node. The communication apparatus includes an acquisition module configured to acquire a carrier frequency configuration message, where the carrier frequency configuration message indicates a frequency-domain resource mapping mode; and a determination module configured to determine a frequency-domain resource used by a sidelink signal or channel according to the frequency-domain resource mapping mode.

An embodiment of the present application provides a communication apparatus. The communication apparatus is applied to a second communication node. The communication apparatus includes a sender configured to send a dedicated system message or a system broadcast message to a first communication node to enable the first communication node to acquire a carrier frequency configuration message according to the dedicated system message or the system broadcast message. The carrier frequency configuration message includes a frequency-domain resource mapping mode. The frequency-domain resource mapping mode is used to determine a frequency-domain resource used by a sidelink signal or channel.

An embodiment of the present application provides a communication device. The communication device includes a memory and at least one processor. The memory is configured to store at least one program. When performed by the at least one processor, the at least one program causes the at least one processor to perform the communication method of any aforementioned embodiment.

An embodiment of the present application provides a storage medium having a computer program stored therein, where the computer program, when performed by a processor, causes the processor to perform the communication method of any aforementioned embodiment.

### BRIEF DESCRIPTION OF DRAWINGS

FIG. 1 is a flowchart of a communication method according to an embodiment of the present application.
FIG. 2 is a flowchart of a communication method according to an embodiment of the present application.
FIG. 3 is a diagram illustrating S-SSB configuration in a discrete frequency-domain resource mapping mode according to an embodiment of the present application.
FIG. 4 is a diagram illustrating configuration in a continuous frequency-domain resource mapping mode according to an embodiment of the present application.
FIG. 5 is a diagram illustrating sub-channel configuration in a discrete frequency-domain resource mapping mode according to an embodiment of the present application.
FIG. 6 is a diagram illustrating sub-channel configuration in a continuous frequency-domain resource mapping mode according to an embodiment of the present application.
FIG. 7 is a diagram illustrating configuration of REs in a resource block according to an embodiment of the present application.
FIG. 8 is a diagram illustrating configuration of REs in a resource block group according to an embodiment of the present application.
FIG. 9 is a diagram illustrating configuration of REs in a resource block according to an embodiment of the present application.
FIG. 10 is a diagram illustrating configuration of REs in a resource block group according to an embodiment of the present application.
FIG. 11 is a block diagram of a communication apparatus according to an embodiment of the present application.
FIG. 12 is a block diagram of a communication apparatus according to an embodiment of the present application.
FIG. 13 is a diagram illustrating the structure of a communication device according to an embodiment of the present application.

### DETAILED DESCRIPTION

Embodiments of the present application are described hereinafter in conjunction with drawings. The present application is described below in conjunction with embodiments and the drawings, and the examples illustrated are intended to explain the present application.

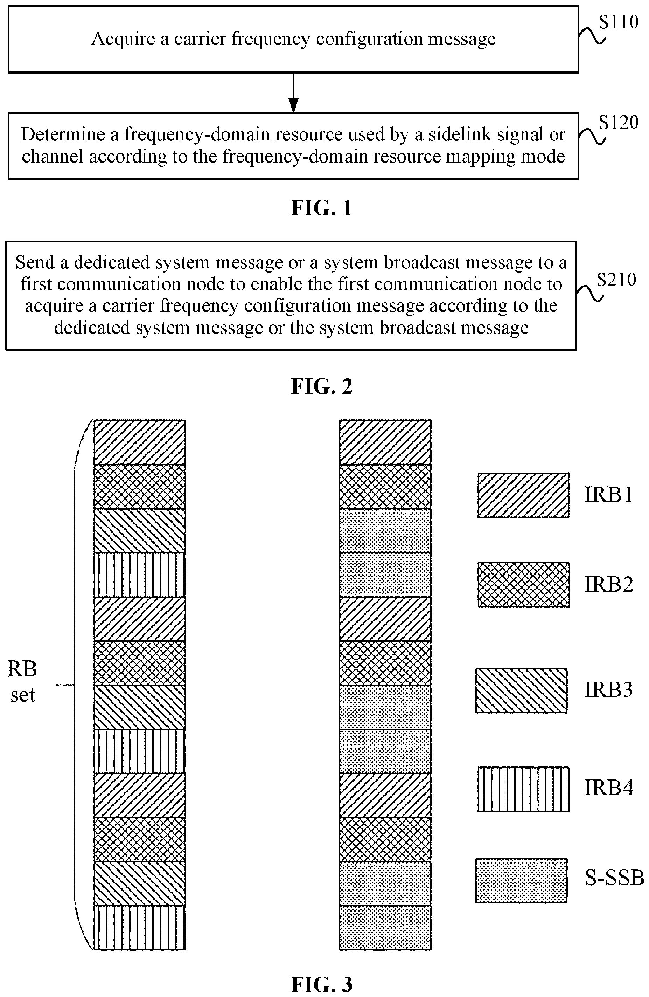

In an embodiment, FIG. 1 is a flowchart of a communication method according to an embodiment of the present application. This embodiment is applied to configuration of a flexible frequency-domain resource mapping mode suitable for SL-unlicensed (SL-U). This embodiment may be performed by a first communication node. As shown in FIG. 1, this embodiment includes S110 and S120.

In S110, a carrier frequency configuration message is acquired.

The carrier frequency configuration message indicates a frequency-domain resource mapping mode. The carrier frequency configuration message refers to a configuration message of a carrier frequency used for SL communication. The carrier frequency configuration message is configured for configuration of the frequency-domain resources for SL signals or channels in an SL communication process. The frequency-domain resource mapping mode indicates a mapping between the frequency-domain resources of the SL signals or channels and the frame structure of the SL signals or channels.

In S 120, a frequency-domain resource used by a sidelink signal or channel is determined according to the frequency-domain resource mapping mode.

Sidelink signals or channels refer to various signals or channels involved in the SL communication process. In an embodiment, the sidelink signals or channels may include, but not limited to, one of the following: a sidelink synchronization signal block (S-SSB), a physical sidelink control channel (PSCCH)/physical sidelink shared channel (PSSCH), a physical sidelink feedback channel (PSFCH), a sidelink channel state information reference signal (SL CSI-RS), or a sidelink positioning reference signal (SL PRS). The S-SSB includes an SL primary synchronization signal (PSS), an SL secondary synchronization signal (SSS), and a physical sidelink broadcast channel (PSBCH). In an embodiment, the PSCCH is configured to carry sidelink control information (SCI), the PSSCH is configured to carry the transmission of SL data; the PSFCH is configured to carry Hybrid Automatic Repeat reQuest (HARQ) feedback information; the SL PRS is configured to carry SL positioning signals; and the SL CSI-RS is configured to carry SL channel measurement signals.

In an embodiment, the frequency-domain resource mapping mode may be a discrete frequency-domain resource mapping mode or a continuous frequency-domain resource mapping mode. In an embodiment, the first communication node determines the frequency-domain resources used by the SL signals or channels according to the frequency-domain resource mapping mode, thereby enabling flexible frequency-domain resource mapping for SL-U.

In an embodiment, a bearer message of the carrier frequency configuration message includes one of the following: a dedicated system message, a system broadcast message, or a preconfigured message. The dedicated system message refers to a system message sent from a second communication node to one first communication node. The system broadcast message refers to a system message broadcasted by the second communication node to multiple first communication nodes. In an example, the second communication node may send the dedicated system message or the system broadcast message to the first communication node, with the carrier frequency configuration message carried in the dedicated system message or the system broadcast message. In an example, the carrier frequency configuration message may also be acquired according to a preconfigured message. The preconfigured message may be prestored in a device, configured using a higher-layer signaling, or obtained by negotiation between the first communication node and the second communication node, which is not limited herein.

In an embodiment, acquiring the carrier frequency configuration message includes receiving a dedicated system message or a system broadcast message sent from a second communication node; and acquiring the carrier frequency configuration message from the dedicated system message or the system broadcast message.

In an embodiment, when the carrier frequency configuration message is carried in the dedicated system message or the system broadcast message, the first communication node receives the dedicated system message or the system broadcast message sent from the second communication node and acquires the carrier frequency configuration message according to the dedicated system message or the system broadcast message; determines the frequency-domain resource mapping mode according to the carrier frequency configuration message; and determines the frequency-domain resource used by the SL signal or channel according to the frequency-domain resource mapping mode.

In an embodiment, the carrier frequency configuration message includes at least one of the following: a frequency-domain position of a sidelink synchronization signal block (S-SSB); a subcarrier spacing (SCS); a frequency-domain resource mapping mode of a sidelink synchronization signal block; a frequency-domain resource mapping mode of a sidelink signal or channel; a frequency-domain resource mapping mode of a sidelink control channel and shared channel; a frequency-domain resource mapping mode of a sidelink feedback channel; or a frequency-domain resource mapping mode of a sidelink pilot signal. The frequency-domain position of the S-SSB refers to the position of the S-SSB on the frequency-domain resource. In an example, the frequency-domain resource mapping mode may be defined for one or more types of SL signals or channels. In an example, the frequency-domain resource mapping mode may be defined for all of the SL signals or channels. In an example, when the frequency-domain resource mapping mode is defined for one or more types of SL signals or channels (that is, when the frequency-domain resource mapping mode is configured for the SL signals or SL channels separately), the carrier frequency configuration message may include at least one of the following: the frequency-domain resource mapping mode of the sidelink synchronization signal block; the frequency-domain resource mapping mode of the sidelink control channel and shared channel; the frequency-domain resource mapping mode of the sidelink feedback channel; or the frequency-domain resource mapping mode of the sidelink pilot signal. In an example, when the frequency-domain resource mapping mode is defined for all of the SL signals or channels, the carrier frequency configuration message may include the frequency-domain resource mapping mode of the SL signal or channel.

In an embodiment, the frequency-domain resource mapping mode includes at least one of the following: a discrete frequency-domain resource mapping mode; a continuous frequency-domain resource mapping mode; a continuous frequency-domain resource mapping mode with frequency-domain repetition of a sidelink synchronization signal block; or a frequency-domain resource mapping mode that satisfies a channel bandwidth occupancy requirement. The discrete frequency-domain resource mapping mode means that the frequency-domain resources used by the SL signals or channels are discrete. The continuous frequency-domain resource mapping mode means that the frequency-domain resources used by the SL signals or channels are continuous. The continuous frequency-domain resource mapping mode with frequency-domain repetition of an S-SSB means that the frequency-domain resources used by the SL signals or channels are discrete, but the frequency-domain resources used by the S-SSB are continuous and occupy a larger frequency-domain bandwidth through a repeated mapping in the frequency domain. The frequency-domain resource mapping mode that satisfies channel bandwidth occupancy requirement means that the occupied frequency-domain resources satisfy the Occupied Channel Bandwidth (OCB) requirement, for example, occupy 80% of a channel bandwidth, but the used frequency-domain resources may be discrete. In an example, the frequency-domain resource mapping mode may also include a frequency-domain resource mapping mode that does not take into account the OCB requirement. The frequency-domain resource mapping mode that does not take into account the OCB requirement refers to a mapping mode not considering whether the occupied frequency-domain resources satisfy the OCB requirement, for example, continuous frequency-domain resources that occupy part of the bandwidth.

In an example, the frequency-domain resource mapping mode of a sidelink synchronization signal block includes at least one of the following: a discrete frequency-domain resource mapping mode; a continuous frequency-domain resource mapping mode; a continuous frequency-domain resource mapping mode with frequency-domain repetition of the sidelink synchronization signal block; or a frequency-domain resource mapping mode that satisfies channel bandwidth occupancy requirement.

In an embodiment, the frequency-domain resource mapping mode is indicated through a frequency-domain resource mapping mode indication field. In an embodiment, the frequency-domain resource mapping mode of the SL signal or channel is indicated through a frequency-domain resource mapping mode indication field. In an example, if the frequency-domain resource mapping mode indication field is void or not configured, the default frequency-domain resource mapping mode may be used.

In an embodiment, a configuration granularity of a bearer message of the carrier frequency configuration message includes one of the following: a carrier frequency, a carrier frequency list, a bandwidth part, a shared spectrum channel, a resource pool, or a resource block set. In an example, when the configuration granularity of the bearer message corresponding to the carrier frequency configuration message is at the carrier frequency level, the frequency-domain resource mapping mode of the SL signal or channel on the current carrier is determined according to the carrier frequency configuration message on the current carrier frequency. In an example, when the configuration granularity of the bearer message corresponding to the carrier frequency configuration message is at the carrier frequency list level, the frequency-domain resource mapping mode of the SL signal or channel on the current carrier is determined according to the carrier frequency configuration messages on all carrier frequencies in the current frequency list. In an example, when the configuration granularity of the bearer message corresponding to the carrier frequency configuration message is at the bandwidth part (BWP) level, the frequency-domain resource mapping mode of the SL signal or channel on the current BWP is determined according to the carrier frequency configuration message in the BWP. In an example, when the configuration granularity of the bearer message corresponding to the carrier frequency configuration message is at the shared spectrum channel level, the frequency-domain resource mapping mode of the SL signal or channel is determined according to the carrier frequency configuration message in the shared spectrum channel. In an example, when the configuration granularity of the bearer message corresponding to the carrier frequency configuration message is at the resource pool level, the frequency-domain resource mapping mode of the SL signal or channel in the current resource pool is determined according to the carrier frequency configuration message corresponding to the resource pool. In an example, when the configuration granularity of the bearer message corresponding to the carrier frequency configuration message is at the resource block set (RB set) level, the frequency-domain resource mapping mode of the SL signal or channel is determined according to the carrier frequency configuration message of the RB set.

In an embodiment, the carrier frequency configuration message indicates the frequency-domain resource mapping mode in the following manner: the carrier frequency configuration message indicates a frequency-domain resource mapping mode of an S-SSB.

In an example, when the carrier frequency configuration message includes the frequency-domain resource mapping mode of the SL signal or channel or the frequency-domain resource mapping mode of the S-SSB, the frequency-domain resource mapping mode of the S-SSB may be identified and acquired from the carrier frequency configuration message.

In an embodiment, the carrier frequency configuration message indicates the frequency-domain resource mapping mode in the following manner: the carrier frequency configuration message indicates a frequency-domain resource mapping mode of a sidelink synchronization signal block; and a frequency-domain resource mapping mode of another sidelink signal or channel is determined according to the frequency-domain resource mapping mode of the sidelink synchronization signal block. In an example, it is feasible to determine the frequency-domain resource mapping mode of the S-SSB and then determine the frequency-domain resource mapping mode of other SL signals or channels according to the frequency-domain resource mapping mode of the S-SSB. In an example, other SL signals or channels include at least one of the following: a PSCCH, a PSSCH, a PSFCH, an SL CSI-RS, or an SL PRS.

In an embodiment, the frequency-domain resource mapping mode of the sidelink synchronization signal block includes one of the following: a discrete frequency-domain resource mapping mode; or a frequency-domain resource mapping mode that satisfies channel bandwidth occupancy requirement. Some resource elements (REs) of the sidelink synchronization signal block are reserved resource elements onto which no signal is mapped.

In an embodiment, when the frequency-domain resource mapping mode of the S-SSB is the discrete frequency-domain resource mapping mode or the frequency-domain resource mapping mode that satisfies the OCB requirement, some REs in the S-SSB are reserved REs onto which no signal is mapped to provide guard between frequency-domain resources of the bearer data.

In an embodiment, the reserved resource elements include one of the following: at least one of N resource elements located at the highest frequency-domain position of each resource block of the synchronization signal block or N resource elements located at the lowest frequency-domain position of each resource block of the synchronization signal block; or at least one of N resource elements located at the highest frequency-domain position of each adjacent resource block group of the synchronization signal block or N resource elements located at the lowest frequency-domain position of each adjacent resource block group of the synchronization signal block. Herein, N is a positive integer greater than or equal to 1.

A resource block group consists of two or more contiguous resource blocks in the frequency domain. In an example, at least one of N resource elements located at the highest frequency-domain position of each resource block of the synchronization signal block or N resource elements located at the lowest frequency-domain position of each resource block of the synchronization signal block serve as reserved resource elements. In an example, at least one of N resource elements located at the highest frequency-domain position of each adjacent resource block group of the synchronization signal block or N resource elements located at the lowest frequency-domain position of each adjacent resource block group of the synchronization signal block serve as reserved resource elements.

In an embodiment, the carrier frequency configuration message indicates the frequency-domain resource mapping mode in the following manner: the carrier frequency configuration message indicates a frequency-domain resource mapping mode of the sidelink signal or channel.

In an example, when the carrier frequency configuration message includes the frequency-domain resource mapping mode of the SL signal or channel, the frequency-domain resource mapping mode of the SL signal or channel may be acquired from the carrier frequency configuration message.

In an embodiment, the carrier frequency configuration message indicates no frequency-domain resource mapping mode of the sidelink signal or channel on a carrier frequency, and a default frequency-domain resource mapping mode of the sidelink signal or channel is used. For example, the default frequency-domain resource mapping mode of the SL signal or channel is the continuous frequency-domain resource mapping mode.

In an embodiment, FIG. 2 is a flowchart of a communication method according to an embodiment of the present application. This embodiment is applied to configuration of a flexible frequency-domain resource mapping mode suitable for SL-unlicensed (SL-U). This embodiment may be performed by a second communication node. As shown in FIG. 2, this embodiment includes S210.

In S210, a dedicated system message or a system broadcast message is sent to a first communication node to enable the first communication node to acquire a carrier frequency configuration message according to the dedicated system message or the system broadcast message.

The carrier frequency configuration message includes a frequency-domain resource mapping mode. The frequency-domain resource mapping mode is used to determine a frequency-domain resource used by a sidelink signal or channel. In an embodiment, the carrier frequency configuration message includes at least one of the following: a frequency-domain position of a sidelink synchronization signal block; a subcarrier spacing; a frequency-domain resource mapping mode of the sidelink synchronization signal block; a frequency-domain resource mapping mode of the sidelink signal or channel; a frequency-domain resource mapping mode of a sidelink control channel and shared channel; a frequency-domain resource mapping mode of a sidelink feedback channel; or a frequency-domain resource mapping mode of a sidelink pilot signal.

In an embodiment, the frequency-domain resource mapping mode includes at least one of the following: a discrete frequency-domain resource mapping mode; a continuous frequency-domain resource mapping mode; a continuous frequency-domain resource mapping mode with frequency-domain repetition of a sidelink synchronization signal block; or a frequency-domain resource mapping mode that satisfies channel bandwidth occupancy requirement.

In an embodiment, the frequency-domain resource mapping mode is indicated through a frequency-domain resource mapping mode indication field.

In an embodiment, a configuration granularity of a bearer message of the carrier frequency configuration message includes one of the following: a carrier frequency, a carrier frequency list, a bandwidth part, a shared spectrum channel, a resource pool, or a resource block set.

In an embodiment, the frequency-domain resource mapping mode of the sidelink synchronization signal block includes one of the following: a discrete frequency-domain resource mapping mode; or a frequency-domain resource mapping mode that a satisfies channel bandwidth occupancy requirement. Part of resource elements of the sidelink synchronization signal block are reserved resource elements onto which no signal is mapped.

In an embodiment, the reserved resource elements include one of the following: at least one of N resource elements located at the highest frequency-domain position of each resource block of the synchronization signal block or N resource elements located at the lowest frequency-domain position of each resource block of the synchronization signal block; or at least one of N resource elements located at the highest frequency-domain position of each adjacent resource block group of the synchronization signal block or N resource elements located at the lowest frequency-domain position of each adjacent resource block group of the synchronization signal block. Herein, N is a positive integer greater than or equal to 1.

In an embodiment, the carrier frequency configuration message indicates no frequency-domain resource mapping mode of the sidelink signal or channel on a carrier frequency, and a default frequency-domain resource mapping mode of the sidelink signal or channel is used. For example, the default frequency-domain resource mapping mode of the SL signal or channel is the continuous frequency-domain resource mapping mode.

For explanations of parameters such as the carrier frequency configuration message and the frequency-domain resource mapping mode in the communication method applied to the second communication node, corresponding parameter description in the communication method applied to the first communication node in the aforementioned embodiments can be referred to, which will not be repeated herein.

In an embodiment, the process of determining the frequency-domain resource mapping mode of the S-SSB is described by taking an example in which the first communication node is a UE, the second communication node is a base station, and the UE is within the coverage area of the base station.

In an embodiment, the UE receives the system broadcast message or the dedicated system message sent from the base station to acquire the carrier frequency configuration message for SL communication. The carrier frequency configuration message includes at least the frequency-domain position of the S-SSB on a carrier frequency, the subcarrier spacing, or the frequency-domain resource mapping mode of the S-SSB.

The configuration granularity of the resource configuration message may be a carrier frequency, a BWP, or a shared spectrum channel.

The UE determines the frequency-domain resource mapping mode according to the carrier frequency configuration message on the current carrier. If the frequency-domain resource mapping mode of the S-SSB is indicated as the discrete frequency-domain resource mapping mode, it is determined that the S-SSB uses M interlace RBs (IRBs). The value of M is related to the SCS. For example, when the SCS is 15 kHz, two IRBs are used; and when the SCS is 30 kHz, four IRBs are used. FIG. 3 is a diagram illustrating S-SSB configuration in a discrete frequency-domain resource mapping mode according to an embodiment of the present application. As shown in the left part of FIG. 3, in the discrete frequency-domain resource mapping mode, IRB1, IRB2, IRB3, and IRB4 are arranged in an interleaved manner. As shown in the right part of FIG.3, the position of the first RB of the S-SSB is indicated through the frequency-domain position of the S-SSB, the transmission bandwidth of the S-SSB is required to be within one RB set, and in the discrete frequency-domain resource mapping mode, the SSB corresponds to two IRBs.

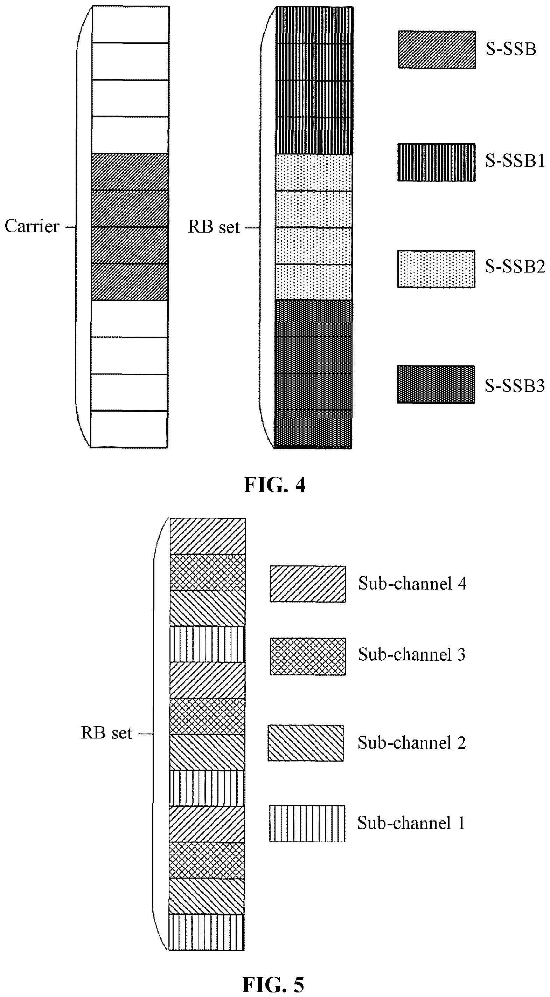

FIG. 4 is a diagram illustrating configuration in a continuous frequency-domain resource mapping mode according to an embodiment of the present application. The UE determines the resource mapping mode according to the carrier frequency configuration message on the current carrier. If the frequency-domain resource mapping mode of the S-SSB is the continuous frequency-domain resource mapping mode, the UE determines that the S-SSB uses 11 contiguous physical resource blocks (PRBs) in the frequency domain. As shown in the left part of FIG. 4, the position of the first RB of the S-SSB is indicated through the frequency-domain position of the S-SSB, and the transmission bandwidth of the S-SSB is required to be within an RB set.

The UE determines the resource mapping mode according to the carrier frequency configuration message on the current carrier. If the frequency-domain resource mapping mode of the S-SSB is the continuous frequency-domain resource mapping mode with frequency-domain repetition of an S-SSB, the UE determines that the S-SSB uses 11 contiguous physical resource blocks (PRBs) in the frequency domain, and M S-SSBs are mapped repeatedly in the frequency domain. As shown in the right part of FIG. 4, the position of the central RB or the first RB of the S-SSB is indicated through the frequency-domain position of the S-SSB, and the transmission bandwidth of all S-SSBs is required to be within an RB set.

In an example, it is determined, according to the frequency-domain resource mapping mode of the S-SSB, that the frequency-domain resource mapping mode of other SL signals or channels is consistent with the frequency-domain resource mapping mode of the S-SSB.

In an example, the SL signal or channel include at least one of the following: an SL control channel, PSCCH, configured to carry SL control information (SCI); an SL shared channel, PSSCH, configured to carry SL data transmission; an SL discovery channel, PSDCH, configured to carry a discovery signal; an SL feedback channel, PSFCH, configured to carry HARQ feedback information; an SL positioning signal, SL-PRS, configured to carry an SL positioning signal; or an SL channel state information reference signal, SL-CSI-RS, configured to carry an SL CSI-RS signal.

For example, if the frequency-domain resource mapping mode of the S-SSB is the discrete frequency-domain resource mapping mode, then it is determined that the frequency-domain resource mapping mode of the PSCCH/PSSCH is also the discrete frequency-domain resource mapping mode, that is, it is determined that the sub-channel used by the frequency-domain resources of the PSCCH/PSSCH consists of several interlace RBs (IRBs). For another example, if the frequency-domain resource mapping mode of the S-SSB is the continuous frequency-domain resource mapping mode, then it is determined that the frequency-domain resource mapping mode of the PSCCH/PSSCH is also the continuous frequency-domain resource mapping mode, that is, it is determined that each sub-channel used by the frequency-domain resources of the PSCCH/PSSCH consists of several continuous RBs.

In an embodiment, the process of determining the frequency-domain resource mapping mode of the S-SSB is described by taking an example in which the first communication node is a UE, the second communication node is a base station, and the UE is outside the coverage area of the base station.

In an embodiment, the UE acquires the carrier frequency configuration message for SL communication. The carrier frequency configuration message includes at least the frequency-domain position of the S-SSB on a carrier frequency, the subcarrier spacing, or the frequency-domain resource mapping mode of the S-SSB. The UE then determines the frequency-domain resource mapping mode of the S-SSB according to the carrier frequency configuration message on the current carrier.

If the frequency-domain resource mapping mode of the S-SSB is indicated as the discrete frequency-domain resource mapping mode, it is determined according to this frequency-domain resource mapping mode that the S-SSB uses M interlace RBs (IRBs). The value of M is related to the SCS. For example, when the SCS is 15 kHz, two IRBs are used; and when the SCS is 30 kHz, four IRBs are used. As shown in the left part of FIG. 3, in the discrete frequency-domain resource mapping mode, IRB1, IRB2, IRB3, and IRB4 are arranged in an interleaved manner. As shown in the right part of FIG. 3, the position of the first RB of the S-SSB is indicated through the frequency-domain position of the S-SSB, and the transmission bandwidth of the S-SSB is required to be within one RB set.

In an example, it is determined, according to the frequency-domain resource mapping mode of the S-SSB, that the frequency-domain resource mapping mode of an other SL signal or channel is the same as the frequency-domain resource mapping mode of the S-SSB. The other SL signal or SL channel includes at least one of the following: an SL control channel, PSCCH, configured to carry SL control information (SCI); an SL shared channel, PSSCH, configured to carry SL data transmission; an SL discovery channel, PSDCH, configured to carry a discovery signal; an SL feedback channel, PSFCH, configured to carry HARQ feedback information; an SL positioning signal, SL-PRS, configured to carry an SL positioning signal; or an SL channel state information reference signal, SL-CSI-RS, configured to carry an SL CSI-RS signal.

In an embodiment, the process in which the frequency-domain resource mapping mode of the SL signal or channel is indicated through a frequency-domain resource mapping mode indication field is described by using a UE as the first communication node and a base station as the second communication node as an example.

In an embodiment, the UE receives the system broadcast message or the dedicated system message or acquires, according to the preconfigured message, the carrier frequency configuration message for SL communication. The carrier frequency configuration message includes at least the frequency-domain resource mapping mode of the SL signal or channel on a carrier frequency.

If the frequency-domain resource mapping mode of the SL signal or channel is indicated as the discrete frequency-domain resource mapping mode, it is determined that the S-SSB uses M interlace RBs (IRBs). The value of M is related to the SCS. For example, when the SCS is 15 kHz, two IRBs are used; and when the SCS is 30 kHz, four IRBs are used. As shown in the left part of FIG. 3, in the discrete frequency-domain resource mapping mode, IRB1, IRB2, IRB3, and IRB4 are arranged in an interleaved manner. As shown in the right part of FIG. 3, the position of the first RB of the S-SSB is indicated through the frequency-domain position of the S-SSB, the transmission bandwidth of the S-SSB is required to be within one RB set, and in the discrete frequency-domain resource mapping mode, the SSB corresponds to two IRBs.

Additionally, it is determined that the frequency-domain resource mapping mode of the PSCCH/PSSCH and/or PSFCH is the discrete frequency-domain resource mapping mode. That is, the frequency-domain resources used are mapped with IRBs as the basic unit of resource mapping. That is, each sub-channel consists of one or more IRBs. FIG. 5 is a diagram illustrating sub-channel configuration in a discrete frequency-domain resource mapping mode according to an embodiment of the present application. As shown in FIG. 5, IRBs are located in one or more RB sets, and each sub-channel consists of one or more IRBs.

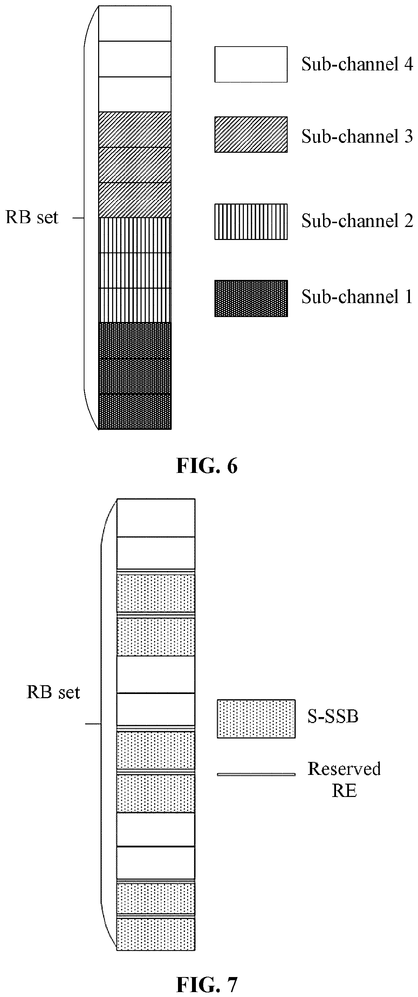

If the frequency-domain resource mapping mode of the SL signal or channel is indicated as the continuous frequency-domain resource mapping mode, it is determined that the S-SSB uses 11 contiguous PRBs in the frequency domain. The position of the first RB of the S-SSB is indicated through the frequency-domain position of the S-SSB. The transmission bandwidth of the S-SSB is required to be within an RB set. It is also determined that the frequency-domain resource mapping mode of the PSCCH/PSSCH and/or PSFCH is the continuous frequency-domain resource mapping mode, or one sub-channel consists of contiguous PRBs. FIG. 6 is a diagram illustrating sub-channel configuration in a continuous frequency-domain resource mapping mode according to an embodiment of the present application. As shown in FIG. 6, one sub-channel consists of contiguous PRBs.

In an example, the SL signal or channel includes at least one of the following: an SL synchronization signal, S-SSB, configured to carry a synchronization signal and SL broadcast information (PSBCH); an SL control channel, PSCCH, configured to carry SL control information (SCI); an SL shared channel, PSSCH, configured to carry SL data transmission; an SL discovery channel, PSDCH, configured to carry a discovery signal; an SL feedback channel, PSFCH, configured to carry HARQ feedback information; an SL positioning signal, SL-PRS, configured to carry an SL positioning signal; or an SL channel state information reference signal, SL-CSI-RS, configured to carry an SL CSI-RS signal.

In an embodiment, the process in which the frequency-domain resource mapping mode of the SL signal or channel is not indicated through a frequency-domain resource mapping mode indication field, that is, the default frequency-domain resource mapping mode of the SL signal or channel, is described by using a UE as the first communication node and a base station as the second communication node as an example.

In an embodiment, the UE receives the system broadcast message or the dedicated system message or acquires, according to the preconfigured message, the carrier frequency configuration message for SL communication.

In an embodiment, the carrier frequency configuration message indicates no frequency-domain resource mapping mode of the SL signal or channel on a carrier frequency, and a default frequency-domain resource mapping mode of the SL signal or channel is used.

For another example, the default frequency-domain resource mapping mode of the SL signal or channel is the discrete frequency-domain resource mapping mode. See FIG. 3.

The SL signal or channel includes at least one of the following: an SL synchronization signal, S-SSB, configured to carry a synchronization signal and SL broadcast information (PSBCH); an SL control channel, PSCCH, configured to carry SL control information (SCI); an SL shared channel, PSSCH, configured to carry SL data transmission; an SL discovery channel, PSDCH, configured to carry a discovery signal; an SL feedback channel, PSFCH, configured to carry HARQ feedback information; an SL positioning signal, SL-PRS, configured to carry an SL positioning signal; or an SL channel state information reference signal, SL-CSI-RS, configured to carry an SL CSI-RS signal.

In an embodiment, assuming that the first communication node is a UE, the second communication node is a base station, and the S-SSB uses discrete frequency-domain resources, for example, three RB groups, with N being set as 2 (that is, each RB group includes two RBs), the configuration process of reserving some REs in the S-SSB is described below. The value of N is configured by the network or predefined by the system. If the frequency-domain resource mapping mode of the SL signal or channel is indicated as the discrete frequency-domain resource mapping mode, it is determined that the S-SSB uses M interlace RBs (IRBs). The value of M is related to the SCS. For example, when the SCS is 15 kHz, two IRBs are used; and when the SCS is 30 kHz, four IRBs are used. As shown in the left part of FIG. 3, in the discrete frequency-domain resource mapping mode, IRB1, IRB2, IRB3, and IRB4 are arranged in an interleaved manner. As shown in the right part of FIG. 3, the position of the first RB of the S-SSB is indicated through the frequency-domain position of the S-SSB, the transmission bandwidth of the S-SSB is required to be within one RB set, and in the discrete frequency-domain resource mapping mode, the SSB corresponds to two IRBs.

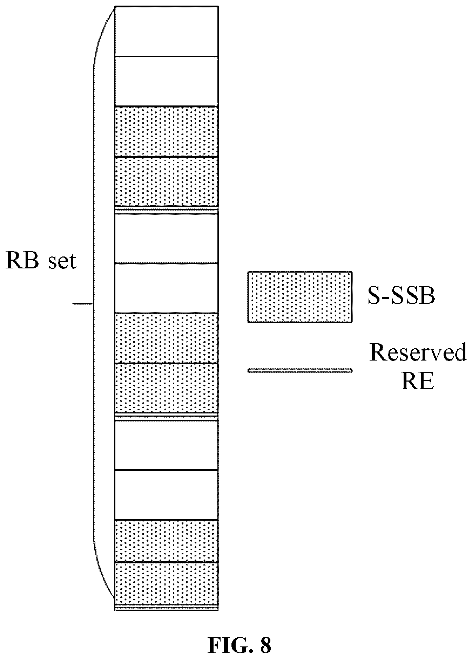

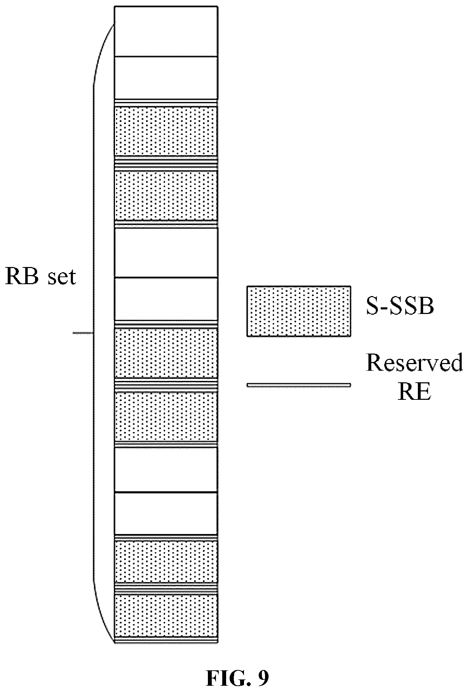

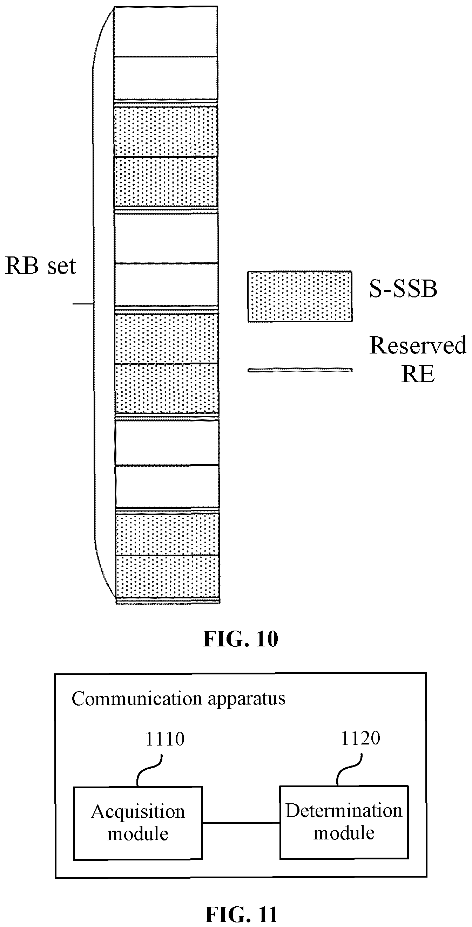

FIG. 7 is a diagram illustrating configuration of REs in a resource block according to an embodiment of the present application. FIG. 8 is a diagram illustrating configuration of REs in a resource block group according to an embodiment of the present application. FIG. 9 is a diagram illustrating configuration of REs in a resource block according to an embodiment of the present application. FIG. 10 is a diagram illustrating configuration of REs in a resource block group according to an embodiment of the present application. When the frequency-domain resource mapping mode of the S-SSB includes the discrete frequency-domain resource mapping mode or the frequency-domain resource mapping mode that satisfies the channel bandwidth occupancy requirement, some REs in the S-SSB are reserved REs onto which no signal is mapped. The reserved REs may be at least one of N REs located at the highest frequency-domain position of each RB of the S-SSB or N REs located at the lowest frequency-domain position of each RB of the S-SSB; or at least one of N REs located at the highest frequency-domain position of each RB group of the S-SSB or N REs located at the lowest frequency-domain position of each RB group of the S-SSB.

As shown in FIG. 7, the S-SSB uses discrete frequency-domain resources, for example, three RB groups. In the S-SSB, two resource elements located at the highest frequency-domain position of each RB serve as reserved resource elements.

As shown in FIG. 8, the S-SSB uses discrete frequency-domain resources, for example, three RB groups. Each RB group includes two RBs. In the S-SSB, two resource elements located at the lowest frequency-domain position of each RB group serve as reserved resource elements.

As shown in FIG. 9, the S-SSB uses discrete frequency-domain resources, for example, three RB groups. In the S-SSB, two resource elements located at the highest frequency-domain position of each RB and two resource elements located at the lowest frequency-domain position of each RB serve as reserved resource elements.

As shown in FIG. 10, the S-SSB uses discrete frequency-domain resources, for example, three RB groups. Each RB group includes two RBs. In the S-SSB, two resource elements located at the highest frequency-domain position of each RB group and two resource elements located at the lowest frequency-domain position of each RB group serve as reserved resource elements.

In the aforementioned embodiments, FIGS. 3 and 4 illustrate that each S-SSB includes four PRBs by way of example. In an actual communication process, if the S-SSB uses the continuous frequency-domain resource mapping mode, each S-SSB includes 11 PRBs.

In the aforementioned embodiments, FIGS. 5 and 6 illustrate that each sub-channel includes three PRBs by way of example. In an actual communication process, each sub-channel may include more than three PRBs. For example, one sub-channel includes more than 10 PRBs, depending on actual communications.

In an embodiment, FIG. 11 is a block diagram of a communication apparatus according to an embodiment of the present application. This embodiment is applied to a first communication node. As shown in FIG. 11, the communication apparatus of this embodiment includes an acquisition module 1110 and a determination module 1120.

The acquisition module 1110 is configured to acquire a carrier frequency configuration message, where the carrier frequency configuration message indicates a frequency-domain resource mapping mode. The determination module 1120 is configured to determine frequency-domain resources used by sidelink signals or channels according to the frequency-domain resource mapping mode.

In an embodiment, the sidelink signal or channel includes at least one of the following: a sidelink synchronization signal block, a physical sidelink control channel or physical sidelink shared channel, a physical sidelink feedback channel, a sidelink channel state information reference signal, or a sidelink positioning reference signal.

In an embodiment, a bearer message of the carrier frequency configuration message includes one of the following: a dedicated system message, a system broadcast message, or a preconfigured message.

In an embodiment, the acquisition module 1110 includes a receiving unit and an acquisition unit.

The receiving unit is configured to receive a dedicated system message or a system broadcast message sent from a second communication node. The acquisition unit is configured to acquire the carrier frequency configuration message from the dedicated system message or the system broadcast message.

In an embodiment, the carrier frequency configuration message includes at least one of the following: a frequency-domain position of a sidelink synchronization signal block; a subcarrier spacing; a frequency-domain resource mapping mode of the sidelink synchronization signal block; a frequency-domain resource mapping mode of the sidelink signal or channel; a frequency-domain resource mapping mode of a sidelink control channel and shared channel; a frequency-domain resource mapping mode of a sidelink feedback channel; or a frequency-domain resource mapping mode of a sidelink pilot signal.

In an embodiment, the frequency-domain resource mapping mode includes at least one of the following: a discrete frequency-domain resource mapping mode; a continuous frequency-domain resource mapping mode; a continuous frequency-domain resource mapping mode with frequency-domain repetition of a sidelink synchronization signal block; or a frequency-domain resource mapping mode that satisfies a channel bandwidth occupancy requirement.

In an embodiment, the frequency-domain resource mapping mode is indicated through a frequency-domain resource mapping mode indication field.

In an embodiment, a configuration granularity of a bearer message of the carrier frequency configuration message includes one of the following: a carrier frequency, a carrier frequency list, a bandwidth part, a shared spectrum channel, a resource pool, or a resource block set.

In an embodiment, the carrier frequency configuration message indicates the frequency-domain resource mapping mode in the following manner: the carrier frequency configuration message indicates a frequency-domain resource mapping mode of a sidelink synchronization signal block.

In an embodiment, the carrier frequency configuration message indicates the frequency-domain resource mapping mode in the following manner: the carrier frequency configuration message indicates a frequency-domain resource mapping mode of a sidelink synchronization signal block; and a frequency-domain resource mapping mode of an other sidelink signal or channel is determined according to the frequency-domain resource mapping mode of the sidelink synchronization signal block.

In an embodiment, the frequency-domain resource mapping mode of the sidelink synchronization signal block includes one of the following: a discrete frequency-domain resource mapping mode; or a frequency-domain resource mapping mode that satisfies a channel bandwidth occupancy requirement. Part of resource elements of the sidelink synchronization signal block are reserved resource elements onto which no signal is mapped.

In an embodiment, the reserved resource elements include one of the following: at least one of N resource elements located at the highest frequency-domain position of each resource block of the synchronization signal block or N resource elements located at the lowest frequency-domain position of each resource block of the synchronization signal block; or at least one of N resource elements located at the highest frequency-domain position of each adjacent resource block group of the synchronization signal block or N resource elements located at the lowest frequency-domain position of each adjacent resource block group of the synchronization signal block. Herein, N is a positive integer greater than or equal to 1.

In an embodiment, the carrier frequency configuration message indicates the frequency-domain resource mapping mode in the following manner: the carrier frequency configuration message indicates a frequency-domain resource mapping mode of the sidelink signal or channel.

In an embodiment, the carrier frequency configuration message indicates no frequency-domain resource mapping mode of the sidelink signal or channel on a carrier frequency, and a default frequency-domain resource mapping mode of the sidelink signal or channel is used.

The communication apparatus of this embodiment is configured to implement the communication method applied to the first communication node in the embodiment shown in FIG. 1 and has similar implementation principles and technical effects, which are not repeated herein.

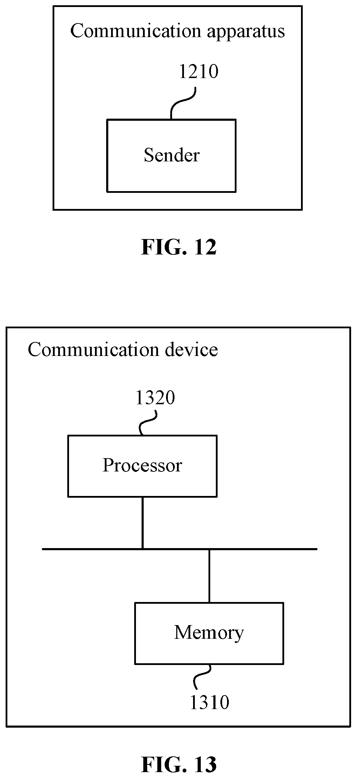

In an embodiment, FIG. 12 is a block diagram of a communication apparatus according to an embodiment of the present application. This embodiment is applied to a second communication node. As shown in FIG. 12, the communication apparatus of this embodiment includes a sender 1210.

The sender 1210 is configured to send a dedicated system message or a system broadcast message to a first communication node to enable the first communication node to acquire a carrier frequency configuration message according to the dedicated system message or the system broadcast message. The carrier frequency configuration message includes a frequency-domain resource mapping mode. The frequency-domain resource mapping mode is used to determine frequency-domain resources used by sidelink signals or channels.

In an embodiment, the carrier frequency configuration message includes at least one of the following: a frequency-domain position of a sidelink synchronization signal block; a subcarrier spacing; a frequency-domain resource mapping mode of the sidelink synchronization signal block; a frequency-domain resource mapping mode of the sidelink signal or channel; a frequency-domain resource mapping mode of a sidelink control channel and shared channel; a frequency-domain resource mapping mode of a sidelink feedback channel; or a frequency-domain resource mapping mode of a sidelink pilot signal.

In an embodiment, the frequency-domain resource mapping mode includes at least one of the following: a discrete frequency-domain resource mapping mode; a continuous frequency-domain resource mapping mode; a continuous frequency-domain resource mapping mode with frequency-domain repetition of a sidelink synchronization signal block; or a frequency-domain resource mapping mode that satisfies a channel bandwidth occupancy requirement.

In an embodiment, the frequency-domain resource mapping mode is indicated through a frequency-domain resource mapping mode indication field.

In an embodiment, a configuration granularity of a bearer message of the carrier frequency configuration message includes one of the following: a carrier frequency, a carrier frequency list, a bandwidth part, a shared spectrum channel, a resource pool, or a resource block set.

In an embodiment, the frequency-domain resource mapping mode of the sidelink synchronization signal block includes one of the following: a discrete frequency-domain resource mapping mode; or a frequency-domain resource mapping mode that satisfies a channel bandwidth occupancy requirement. Part of resource elements of the sidelink synchronization signal block are reserved resource elements onto which no signal is mapped.

In an embodiment, the reserved resource elements include one of the following: at least one of N resource elements located at the highest frequency-domain position of each resource block of the synchronization signal block or N resource elements located at the lowest frequency-domain position of each resource block of the synchronization signal block; or at least one of N resource elements located at the highest frequency-domain position of each adjacent resource block group of the synchronization signal block or N resource elements located at the lowest frequency-domain position of each adjacent resource block group of the synchronization signal block. Herein, N is a positive integer greater than or equal to 1.

In an embodiment, the carrier frequency configuration message indicates no frequency-domain resource mapping mode of the sidelink signal or channel on a carrier frequency, and a default frequency-domain resource mapping mode of the sidelink signal or channel is used.

The communication apparatus of this embodiment is configured to implement the communication method applied to the second communication node in the embodiment shown in FIG. 2 and has similar implementation principles and technical effects. These are not repeated here.

In an embodiment, FIG. 13 is a diagram illustrating the structure of a communication device according to an embodiment of the present application. As shown in FIG. 13, the device of the present application includes a processor 1310 and a memory 1320. One or more processors 1310 may be configured in the device. FIG. 13 uses one processor 1310 as an example. One or more memories 1320 may be configured in the device. FIG. 13 uses one memory 1320 as an example. The processor 1310 and memory 1320 of the device are connected by a bus or in other manners. The connection by a bus is used as an example in FIG. 13. In this embodiment, the device may be the first communication node.

As a computer-readable storage medium, the memory 1320 may be configured to store software programs and computer-executable programs and modules, such as program instructions/modules (for example, the acquisition module 1110 and the determination module 1120 in the communication apparatus) corresponding to the device of any embodiment of the present application. The memory 1320 may include a program storage region and a data storage region. The program storage region may store an operating system and an application program required by at least one function. The data storage region may store data created according to the use of the device. Additionally, the memory 1320 may include a high-speed random-access memory or a nonvolatile memory such as at least one disk memory, a flash memory or another nonvolatile solid-state memory. In some examples, the memory 1320 may be a memory remote from the processor 1310. The remote memory may be connected to the device by a network. Examples of the preceding network include, but are not limited to, the Internet, an intranet, a local area network, a mobile communication network, and a combination thereof.

In the case where the communication device is the first communication node, the device may be configured to perform the communication method applied to the first communication node according to any preceding embodiment and has corresponding functions and effects.

In the case where the communication device is the second communication node, the device may be configured to perform the communication method applied to the second communication node according to any preceding embodiment and has corresponding functions and effects.

An embodiment of the present application provides a storage medium including computer-executable instructions which, when executed by a computer processor, cause the processor to perform a communication method executed by a first communication node. The communication method includes acquiring a carrier frequency configuration message, where the carrier frequency configuration message indicates a frequency-domain resource mapping mode; and determining frequency-domain resources used by sidelink signals or channels according to the frequency-domain resource mapping mode.

An embodiment of the present application provides a storage medium including computer-executable instructions which, when executed by a computer processor, cause the processor to perform a communication method executed by a second communication node. The communication method includes sending a dedicated system message or a system broadcast message to a first communication node to enable the first communication node to acquire a carrier frequency configuration message according to the dedicated system message or the system broadcast message. The carrier frequency configuration message includes a frequency-domain resource mapping mode. The frequency-domain resource mapping mode is used to determine frequency-domain resources used by sidelink signals or channels.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, performed by a first communication node, comprising:
acquiring a carrier frequency configuration message, wherein the carrier frequency configuration message indicates a frequency-domain resource mapping mode; and
determining a frequency-domain resource used by a sidelink signal or channel according to the frequency-domain resource mapping mode.

2. The communication method of claim 1, wherein the sidelink signal or channel comprises at least one of the following: a sidelink synchronization signal block, a physical sidelink control channel or physical sidelink shared channel, a physical sidelink feedback channel, a sidelink channel state information reference signal, or a sidelink positioning reference signal.

3. The communication method of claim 1, wherein a bearer message of the carrier frequency configuration message comprises one of the following: a dedicated system message, a system broadcast message, or a preconfigured message.

4. The communication method of claim 1, wherein acquiring the carrier frequency configuration message comprises:
receiving a dedicated system message or a system broadcast message sent from a second communication node; and
acquiring the carrier frequency configuration message from the dedicated system message or the system broadcast message.

5. The communication method of claim 1, wherein the carrier frequency configuration message comprises at least one of the following:
a frequency-domain position of a sidelink synchronization signal block; a subcarrier spacing; a frequency-domain resource mapping mode of the sidelink synchronization signal block; a frequency-domain resource mapping mode of the sidelink signal or channel; a frequency-domain resource mapping mode of a sidelink control channel and shared channel; a frequency-domain resource mapping mode of a sidelink feedback channel; or a frequency-domain resource mapping mode of a sidelink pilot signal.

6. The communication method of claim 1 or 5, wherein the frequency-domain resource mapping mode comprises at least one of the following:
a discrete frequency-domain resource mapping mode; a continuous frequency-domain resource mapping mode; a continuous frequency-domain resource mapping mode with frequency-domain repetition of a sidelink synchronization signal block; or a frequency-domain resource mapping mode that satisfies a channel bandwidth occupancy requirement.

7. The communication method of claim 6, wherein the frequency-domain resource mapping mode is indicated through a frequency-domain resource mapping mode indication field.

8. The communication method of claim 1, wherein a configuration granularity of a bearer message of the carrier frequency configuration message comprises one of the following:
a carrier frequency, a carrier frequency list, a bandwidth part, a shared spectrum channel, a resource pool, or a resource block set.

9. The communication method of claim 1, wherein the carrier frequency configuration message indicates the frequency-domain resource mapping mode in the following manner:
the carrier frequency configuration message indicates a frequency-domain resource mapping mode of a sidelink synchronization signal block.

10. The communication method of claim 1, wherein the carrier frequency configuration message indicates the frequency-domain resource mapping mode in the following manner:
the carrier frequency configuration message indicates a frequency-domain resource mapping mode of a sidelink synchronization signal block; and
a frequency-domain resource mapping mode of an other sidelink signal or channel is determined according to the frequency-domain resource mapping mode of the sidelink synchronization signal block.

11. The communication method of claim 9 or 10, wherein the frequency-domain resource mapping mode of the sidelink synchronization signal block comprises one of the following: a discrete frequency-domain resource mapping mode; or a frequency-domain resource mapping mode that satisfies channel bandwidth occupancy requirement,
wherein part of resource elements of the sidelink synchronization signal block are reserved resource elements onto which no signal is mapped.

12. The communication method of claim 11, wherein the reserved resource elements comprise one of the following:
at least one of N resource elements located at a highest frequency-domain position of each resource block of the synchronization signal block or N resource elements located at a lowest frequency-domain position of each resource block of the synchronization signal block; or
at least one of N resource elements located at a highest frequency-domain position of each adjacent resource block group of the synchronization signal block or N resource elements located at a lowest frequency-domain position of each adjacent resource block group of the synchronization signal block, and
wherein N is a positive integer greater than or equal to 1.

13. The communication method of claim 1, wherein the carrier frequency configuration message indicates the frequency-domain resource mapping mode in the following manner:
the carrier frequency configuration message indicates a frequency-domain resource mapping mode of the sidelink signal or channel.

14. The communication method of claim 1, wherein the carrier frequency configuration message indicates no frequency-domain resource mapping mode of the sidelink signal or channel on a carrier frequency, and a default frequency-domain resource mapping mode of the sidelink signal or channel is used.

15. A communication method, performed by a second communication node, comprising:
sending a dedicated system message or a system broadcast message to a first communication node to enable the first communication node to acquire a carrier frequency configuration message according to the dedicated system message or the system broadcast message, wherein the carrier frequency configuration message comprises a frequency-domain resource mapping mode, and the frequency-domain resource mapping mode is used to determine a frequency-domain resource used by a sidelink signal or channel.

16. A communication device, comprising:
a memory and at least one processor,
wherein the memory is configured to store at least one program; and
wherein when executed by the at least one processor, the at least one program causes the at least one processor to perform the communication method of any one of claims 1 to 14 or the communication method of claim 15.

17. A storage medium having a computer program stored thereon, wherein the computer program, when executed by a processor, causes the processor to perform the communication method of any one of claims 1 to 14 or the communication method of claim 15.
